# EUROPEAN PATENT APPLICATION

(11) **EP 4 273 557 A1**
(43) Date of publication of application: **08.11.2023**
(21) Application number: 22171513.9
(22) Date of filing: 04.05.2022
(51) Int. Cl.: G01P 3/48, F03D 7/00, G01P 21/02

(54) **WIND TURBINE ROTOR SPEED ESTIMATION**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

There is described a method of estimating a rotor speed in a wind turbine, the method comprising (a) obtaining measurement data indicative of structural vibrations within the wind turbine, (b) determining at least one harmonic vibration frequency based on the measurement data, and (c) estimating the rotor speed based on the at least one harmonic vibration frequency. Furthermore, a corresponding arrangement and a monitoring system for a wind turbine are described.

## Description

### Field of Invention

The present invention relates to the field of wind turbines, in particular to techniques for estimating the rotor speed of a wind turbine.

### Art Background

Speed sensing, defined as the measurement of generator/rotor speed, is one of the most critical parts of wind turbine control since it fulfills at least two fundamental roles. Firstly, speed sensing is required for both power/torque control of the generator to ensure optimal energy extraction on the electrical side, and also for control of the rotor pitch system to aerodynamically control the amount of energy being extracted from the wind. An incorrect measurement of the rotor speed can therefore lead to energy production loss. Secondly, speed sensing is required to ensure that the turbine does not go into overspeed. Overspeed can cause blade failures due to flutter or even catastrophic tower failures due to excessive loading. Speed sensing is hence an integral part of both the primary and secondary layers of safety in the wind turbine safety and control system.

A failure of the speed sensor can hence cause extreme safety issues if not accounted for appropriately, and all wind turbines will enter a forced shutdown state in case insufficient or inadequate speed measurement sources are available to the control system, e.g., when they are of insufficient quality. Speed sensor failures can hence have significant economic consequences in terms of turbine downtime and service visits.

An undetected speed sensor error, such as loss of quality, sensor drift or excessive noise can be equally detrimental to normal turbine operation. An undetected error is a safety concern, but it may also cause deterioration of power control performance and may lead directly to an unpredictable loss of revenue.

As such, high robustness and sensor redundancy is a top priority in wind turbine instrumentation and control. High quality speed sensing is necessary both for direct control as well as for cross-checking of primary speed control signals.

State of the art wind turbines typically rely on at least two rotor speed signals that are cross compared. If the comparison fails, the wind turbine is typically shut down. Known sources of rotor speed measurement include inductive sensor technology, gyroscopes, and analysis of electrical data from the generator-converter system. These techniques involve significant complexity and corresponding costs and may not work when the converter is not connected.

Hence, there is a need for further techniques of measuring/estimating the rotor speed, in particular simple techniques that do not involve additional or complex hardware but are capable of providing useful and reliable rotor speed information at a relative low price.

### Summary of the Invention

This need may be met by the subject matter according to the independent claims. Advantageous embodiments of the present invention are described by the dependent claims.

According to a first aspect of the invention, there is provided a method of estimating a rotor speed in a wind turbine, the method comprising (a) obtaining measurement data indicative of structural vibrations within the wind turbine, (b) determining at least one harmonic vibration frequency based on the measurement data, and (c) estimating the rotor speed based on the at least one harmonic vibration frequency.

This aspect of the invention is based on the idea that structural vibrations within the wind turbine are measured and analyzed in order to determine at least one harmonic vibration frequency. The structural vibrations may in particular be caused by or related to the rotating movement of the rotor, such as vibrations related to the passing of rotor and stator at magnetic poles. Due to the relationship between the rotor speed and the structural vibrations, the rotor speed can be estimated based on the determined at least one harmonic vibration frequency.

According to an embodiment of the invention, the measurement data is accelerometer data.

The accelerometer data may be provided by one or more accelerometers arranged at one or more locations of the wind turbine, e.g., at one or more locations on the tower surface and/or at one or more locations on or within the nacelle, preferably positioned such that the sensitivity of the sensor to the harmonic frequencies of interest is maximised.

According to a further embodiment of the invention, determining the at least one harmonic vibration frequency comprises utilizing a phase-locked loop and at least one initial harmonic frequency.

The initial harmonic frequency is a starting point or an expected value of the harmonic frequency, such as an integer times a rotor speed measured or estimated in another way, e.g., by a primary rotor speed measurement device. Using the phase-locked loop (PLL), the harmonic frequency then converges until a good estimate is obtained.

According to a further embodiment of the invention, determining the at least one harmonic vibration frequency comprises applying a sliding discrete Fourier transform to the measurement data.

This embodiment is particularly useful when determining several harmonic frequencies (i.e., several multiples of a base frequency) at once.

According to a further embodiment of the invention, estimating the rotor speed is further based on a number of pole pairs of the wind turbine generator.

In particular the passing of rotor and stator at the magnetic poles of each pole pair causes corresponding vibrations in the wind turbine structure. Hence, the number of pole pairs will be decisive for the relationship between the rotor speed and the detected harmonic frequency/frequencies.

According to a further embodiment of the invention, the at least one harmonic vibration frequency comprises a plurality of harmonic vibration frequencies. Furthermore, estimating the rotor speed comprises calculating an average of respective rotor speed estimates corresponding to each of the plurality of harmonic vibration frequencies.

In other words, individual estimates of the rotor speed are calculated for each reliable harmonic vibration frequency estimate and the final estimate is calculated as an average value of the individual estimates.

According to a second aspect of the invention, there is provided an arrangement for estimating a rotor speed in a wind turbine. The arrangement comprises (a) a measurement device configured for obtaining measurement data indicative of structural vibrations within the wind turbine, (b) a determining unit configured for determining at least one harmonic vibration frequency based on the measurement data, and (c) an estimating unit configured for estimating the rotor speed based on the at least one harmonic vibration frequency.

This aspect essentially provides an arrangement for carrying out the method according to the first aspect and is thus based on essentially the same idea as the first aspect discussed above. That is, structural vibrations within the wind turbine are measured by the measurement device and the corresponding data is analyzed by the determining unit in order to determine at least one harmonic vibration frequency. The structural vibrations may in particular be caused by or related to the rotating movement of the rotor, such as vibrations related to the passing of rotor and stator at magnetic poles. Due to the relationship between the rotor speed and the structural vibrations, the rotor speed can be estimated by the estimating unit based on the determined at least one harmonic vibration frequency.

According to a further embodiment of the invention, the measurement device comprises at least one vibration sensor, in particular at least one accelerometer.

The at least one vibration sensor, such as one or more accelerometers, may be arranged at one or more locations of the wind turbine, e.g., at one or more locations on the tower surface and/or at one or more locations on or within the nacelle.

According to a further embodiment of the invention, the determining unit comprises a phase-locked loop. Alternatively, or additionally, the determining unit is configured to apply a sliding discrete Fourier transform to the measurement data.

When utilizing a phase-locked loop, an initial harmonic frequency may be used as a starting point or an expected value of the harmonic frequency, such as an integer times a rotor speed measured or estimated in another way, e.g., by a primary rotor speed measurement device. Using the phase-locked loop (PLL), the harmonic frequency then converges until a good estimate is obtained.

A sliding discrete Fourier transform is particularly useful when determining several harmonic frequencies (i.e., several multiples of a base frequency) at once.

According to a further embodiment of the invention, the estimating unit is further configured to estimate the rotor speed based on a number of pole pairs of the wind turbine generator.

In particular the passing of rotor and stator at the magnetic poles of each pole pair causes corresponding vibrations in the wind turbine structure. Hence, the number of pole pairs will be decisive for the relationship between the rotor speed and the detected harmonic frequency/frequencies.

According to a further embodiment of the invention, the at least one harmonic vibration frequency comprises a plurality of harmonic vibration frequencies. Furthermore, the estimating unit is configured to calculate respective rotor speed estimates corresponding to each of the plurality of harmonic vibration frequencies and to calculate the estimated rotor speed as an average of said respective rotor speed estimates.

In other words, individual estimates of the rotor speed are calculated for each harmonic vibration frequency and the final estimate is calculated as an average value of the individual estimates.

According to a third aspect of the invention, a monitoring system for a wind turbine is provided, the wind turbine comprising a generator having a stator and a rotor. The monitoring system comprises (a) a primary rotor speed measurement device configured for measuring a primary rotor speed value and outputting the primary rotor speed value to a wind turbine control system as an input value for use during a normal operation mode of the wind turbine, (b) an arrangement according to the second aspect or any one of the above embodiments thereof configured to provide an estimated rotor speed value, and (c) a processing device configured to compare the primary rotor speed value and the estimated rotor speed value in order to validate the functioning of the primary rotor speed measurement device.

This aspect utilizes the advantages of the first and second aspects by obtaining an estimated rotor speed value as discussed above. The estimated rotor speed value is then used to validate the functioning of the primary rotor speed measurement device, e.g., by comparing the estimated rotor speed value and the primary rotor speed value. If the two values are sufficiently close to each other, the functioning of the primary rotor speed measurement device has been validated.

According to a further embodiment of the invention, the monitoring system further comprises a secondary rotor speed measurement device configured for measuring a secondary rotor speed value, wherein the processing device is further configured to compare the primary rotor speed value and the secondary rotor speed value in order to validate the functioning of the primary rotor speed measurement device.

In this embodiment, a secondary rotor speed measurement device is also to validate the functioning of the primary rotor speed measurement device by comparing the primary and secondary rotor speed values and determine whether they are sufficiently close to each other.

According to a further embodiment of the invention, if validation of the functioning of the primary rotor speed measurement device fails, the processing device is further configured to (a) output an error signal indicating a failure in the primary rotor speed measurement device, (b) compare the secondary rotor speed value and the estimated rotor speed value in order to validate the functioning of the secondary rotor speed measurement device, and (c) if validation of the functioning of the secondary rotor speed measurement device is successful: output the secondary rotor speed value to the wind turbine control system as the input value for use during the normal operation mode of the wind turbine.

In other words, if the functioning of the primary rotor speed measurement device is not successfully validated, a corresponding error signal is output (such that an operator is notified of the problem and can arrange for corresponding maintenance and/or repair measures to be applied) and the secondary rotor speed measurement device is validated by comparing the secondary rotor speed value and the estimated rotor speed value. If the validation is successful, the secondary rotor speed value replaces the primary rotor speed value as the input value to the wind turbine control system.

According to a further embodiment of the invention, if validation of the functioning of the secondary rotor speed measurement device fails, the processing device is further configured to (a) output an error signal indicating a failure in the secondary rotor speed measurement device, (b) perform a self-check of the arrangement, and (c1) if the self-check is successful: output the estimated rotor speed value to the wind turbine control system as the input value for use during a reduced operation mode of the wind turbine (i.e., an extraordinary mode of turbine operation with reduced non-zero power production intended to reduce turbine loads, support turbine maintenance and minimise revenue loss - may also be referred to as limping mode), or (c2) if the self-check is not successful: output an error signal indicating that the wind turbine must be shut down.

In other words, if the validation of the functioning of the secondary rotor speed measurement device is not successful, a corresponding error signal is output (such that an operator is notified of the problem and can arrange for corresponding maintenance and/or repair measures to be applied) and depending on whether a self-check of the arrangement is successful or not, the estimated rotor speed value is used as the input value for the wind turbine control system to operate in a reduced operation mode (limping mode) or the wind turbine is shut down.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a flowchart of a method according to an embodiment of the present invention.
Figure 2 shows a block diagram of an arrangement according to an embodiment of the present invention.
Figure 3 shows a functional diagram of a monitoring system according to an embodiment of the present invention.
Figure 4 shows a functional diagram of a monitoring system according to an embodiment of the present invention.

### Detailed Description

The illustration in the drawing is schematic. It is noted that in different figures, similar or identical elements are provided with the same reference numerals or with reference numerals which differ only within the first digit.

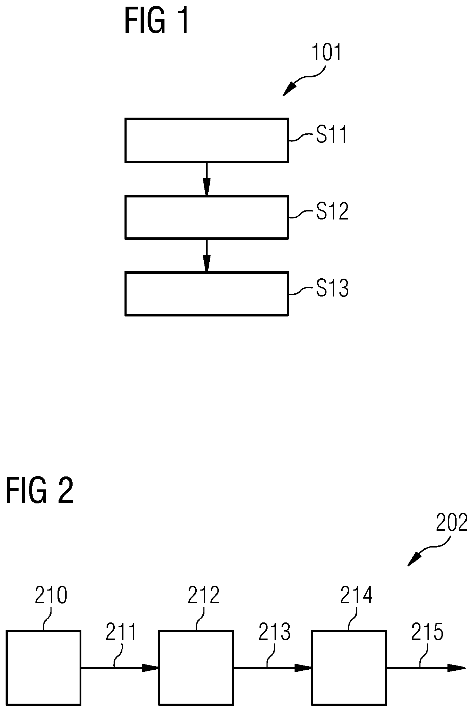

Figure 1 shows a flowchart 101 of a method of estimating a rotor speed in a wind turbine according to an embodiment of the present invention. The method comprises a step S11 of obtaining measurement data indicative of structural vibrations within the wind turbine, in particular structural vibrations caused by or related to the rotating movement of the wind turbine rotor, such as vibrations related to the passing of rotor and stator at magnetic poles. The measurement data may in particular be accelerometer data provided by one or more accelerometers arranged at one or more locations of the wind turbine, e.g., at one or more locations on the tower surface and/or at one or more locations on or within the nacelle.

The method further comprises a step S12 of determining at least one harmonic vibration frequency based on the measurement data. The at least one harmonic vibration frequency may be a single harmonic frequency or a plurality of harmonic frequencies, e.g., a 2^{nd} harmonic frequency, 6^{th} harmonic frequency, a 12^{th} harmonic frequency, and an 18^{th} harmonic frequency relative to the electrical frequency of the generator. The at least one harmonic vibration frequency may be determined in several ways, e.g., by utilizing a phase-locked loop and at least one initial harmonic frequency as a starting point, or by applying a sliding discrete Fourier transform to the measurement data.

The method further comprises a step S13 of estimating the rotor speed based on the at least one harmonic vibration frequency. Here, the relationship between the rotor speed and the structural vibrations is utilized, in particular the number of pole pairs. In general, the nth harmonic vibration frequency will be given as fₙ = n*pp*rpm/60, where pp denotes the number of pole pairs, and rpm is the rotational speed of the rotor in rounds per minute. In the case of a single harmonic vibration frequency, the rotor speed is estimated directly from the harmonic vibration frequency. If more harmonic vibration frequencies are determined, a corresponding estimate for the rotor speed may be determined for each of these harmonic vibration frequencies and the final estimate may then be calculated as an average value of these estimates.

Figure 2 shows a block diagram of an arrangement 202 according to an embodiment of the present invention. The arrangement 202 comprises a measurement device 210, a determining unit 212, and an estimating unit 214.

The measurement device 210 is configured for obtaining measurement data 211 indicative of structural vibrations within the wind turbine and coupled to supply the measurement data 211 to the determining unit 212. The measurement device may in particular comprise one or more accelerometers and the measurement data 211 may be corresponding accelerometer data.

The determining unit 212 is configured for determining at least one harmonic vibration frequency 213 based on the measurement data 211. As described above in conjunction, the determining unit may rely on a PLL or a sliding discrete Fourier transform to determine the one or more harmonic vibration frequencies 213.

The estimating unit 214 is coupled to receive the at least one harmonic vibration frequency 213 and configured to estimate the rotor speed 215 of the wind turbine based thereon in the way described above. The estimated rotor speed 215 is output by the estimating unit 214 and may be supplied e.g. to a wind turbine controller and/or monitoring system (not shown).

It should be noted that although the determining unit 212 and the estimating unit 214 are shown as separate entities they may of course be implemented as functional units within a single system, i.e. in one and the same hardware and/or software system.

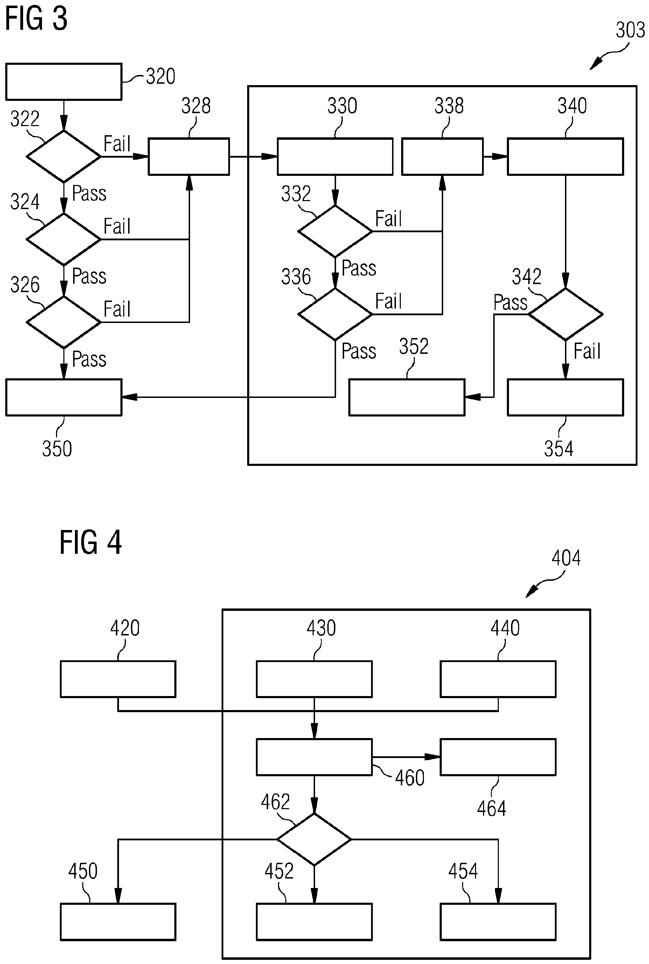

Figure 3 shows a functional diagram 303 of a monitoring system according to an embodiment of the present invention. The monitoring system comprises a primary rotor speed measurement device 320 configured for measuring a primary rotor speed value. The monitoring system further comprises a secondary rotor speed measurement device 330 configured for measuring a secondary rotor speed value. The monitoring system also comprises an arrangement 340 for providing an estimated rotor speed value, the arrangement 340 corresponding to the arrangement 202 shown in Fig. 2 and discussed above.

In operation, the primary rotor speed value output from the primary rotor speed measurement device 320 is subjected to a self-check in 322. If the self-check 322 is passed (successful), a cross validation is performed at 324. The cross validation 324 involves a comparison of the primary rotor speed value and the secondary rotor speed value measured by the secondary rotor speed measurement device 330. If the cross validation 324 is passed, e.g., if the comparison of the primary and secondary rotor speed values indicates that they are sufficiently close to each other, a further cross validation is performed at 326. The further cross validation 326 involves a comparison of at least the primary rotor speed value and the estimated rotor speed value provided by the arrangement 340. If also the further cross validation 326 is passed, the primary rotor speed value is used to operate the safety and control systems of the wind turbine in a normal mode of operation 350.

If one of the self-check 322, cross validation 324 and further cross validation 326 fails, it is determined that the primary rotor speed measurement is not reliable. In this case, corresponding maintenance of the primary rotor speed measurement device 320 is requested 328 and a series of checks is performed to determine whether the secondary rotor speed measurement device 330 can replace the function of the primary rotor speed measurement device 320 until the maintenance has been carried out. These checks involve subjecting the secondary rotor speed value to a self-check 332, and if this is passed, perform a cross validation 336. This cross validation 336 involves a comparison of the secondary rotor speed value and the estimated rotor speed value provided by the arrangement 340. If the cross validation 336 is passed, the secondary rotor speed value is used to operate the safety and control systems of the wind turbine in a normal mode of operation 350.

If one of the self-check 332 and the cross validation 336 fails, it is determined that also the secondary rotor speed measurement is not reliable. In this case, corresponding maintenance of the secondary rotor speed measurement device 330 is requested 338 and a self-check 342 of the estimated rotor speed value provided by the arrangement 340 is performed to establish whether the estimated rotor speed value can be used to operate the wind turbine to at least some extent until the requested maintenance work has been carried out. If the self-check 342 is passed, the wind turbine continues operation in a reduced operation mode 352 or so-called limping mode where the loads on the wind turbine are less than during normal operation. If the self-check 342 fails, the wind turbine is shut down 354 or turned into an idling mode of operation 354.

As can be seen, the estimated rotor speed value is used for further cross validation of the primary and/or secondary rotor speed signals and it may even be used for operating the wind turbine in a reduced operating mode instead of immediately shutting down the wind turbine, which may be beneficial in terms of partially compensating for revenue or for reducing turbine loads.

Figure 4 shows a functional diagram 404 of a monitoring system according to a further embodiment of the present invention. Similar to the system shown in Fig. 3 and discussed above, this system also comprises a primary rotor speed measurement device 420 configured for measuring a primary rotor speed value, a secondary rotor speed measurement device 430 configured for measuring a secondary rotor speed value, and an arrangement 440 for providing an estimated rotor speed value, the arrangement 440 corresponding to the arrangements 202 and 330 shown respectively in Fig. 2 and Fig. 3 and discussed above. The primary, secondary and estimated rotor speed values are all supplied to a sensor fusion and cross validation unit 460 which fuses the three rotor speed values (e.g. by averaging them (weighted or unweighted)) and performs cross validation by comparing the respective values with the fusion result. If this process reveals that one or more of the primary rotor speed measurement device 420, the secondary rotor speed measurement device 430, and the arrangement 440 requires maintenance, corresponding requests are placed at 464. The result of the processing is supplied to a mode selection unit 462 which selects one of a normal mode of operation 450, a reduced (or limping) mode of operation 452, and shut down or idling mode of operation 454.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of estimating a rotor speed in a wind turbine, the method comprising
obtaining (S11) measurement data indicative of structural vibrations within the wind turbine,
determining (S12) at least one harmonic vibration frequency based on the measurement data, and
estimating (S13) the rotor speed based on the at least one harmonic vibration frequency.

2. The method according to claim 1, wherein the measurement data is accelerometer data.

3. The method according to claim 1 or 2, wherein determining the at least one harmonic vibration frequency comprises utilizing a phase-locked loop and at least one initial harmonic frequency.

4. The method according to claim 1 or 2, wherein determining the at least one harmonic vibration frequency comprises applying a sliding discrete Fourier transform to the measurement data.

5. The method according to any one of the preceding claims wherein estimating the rotor speed is further based on a number of pole pairs of the wind turbine generator.

6. The method according to any one of the preceding claims, wherein the at least one harmonic vibration frequency comprises a plurality of harmonic vibration frequencies, and wherein estimating the rotor speed comprises calculating an average of respective rotor speed estimates corresponding to each of the plurality of harmonic vibration frequencies.

7. An arrangement for estimating a rotor speed in a wind turbine, the arrangement comprising
a measurement device (210) configured for obtaining measurement data (211) indicative of structural vibrations within the wind turbine,
a determining unit (212) configured for determining at least one harmonic vibration frequency (213) based on the measurement data (211), and
an estimating unit (214) configured for estimating the rotor speed (215) based on the at least one harmonic vibration frequency (213).

8. The arrangement according to claim 7, wherein the measurement device comprises at least one vibration sensor, in particular at least one accelerometer.

9. The arrangement according to claim 7 or 8, wherein the determining unit comprises a phase-locked loop, or wherein the determining unit is configured to apply a sliding discrete Fourier transform to the measurement data.

10. The arrangement according to any one of claims 7 to 9, wherein the estimating unit is further configured to estimate the rotor speed based on a number of pole pairs of the wind turbine generator.

11. The arrangement according to any one of claims 7 to 10, wherein the at least one harmonic vibration frequency comprises a plurality of harmonic vibration frequencies, and wherein the estimating unit is configured to calculate respective rotor speed estimates corresponding to each of the plurality of harmonic vibration frequencies and to calculate the estimated rotor speed as an average of said respective rotor speed estimates.

12. A monitoring system for a wind turbine, the wind turbine comprising a generator having a stator and a rotor, the monitoring system comprising:
a primary rotor speed measurement device configured for measuring a primary rotor speed value and outputting the primary rotor speed value to a wind turbine control system as an input value for use during a normal operation mode of the wind turbine,
an arrangement according to any one of claims 7 to 11 configured to provide an estimated rotor speed value, and
a processing device configured to compare the primary rotor speed value and the estimated rotor speed value in order to validate the functioning of the primary rotor speed measurement device.

13. The monitoring system according to claim 12, further comprising a secondary rotor speed measurement device configured for measuring a secondary rotor speed value, wherein the processing device is further configured to compare the primary rotor speed value and the secondary rotor speed value in order to validate the functioning of the primary rotor speed measurement device.

14. The monitoring system according to claim 13, wherein, if validation of the functioning of the primary rotor speed measurement device fails, the processing device is further configured to:
output an error signal indicating a failure in the primary rotor speed measurement device,
compare the secondary rotor speed value and the estimated rotor speed value in order to validate the functioning of the secondary rotor speed measurement device, and
if validation of the functioning of the secondary rotor speed measurement device is successful: output the secondary rotor speed value to the wind turbine control system as the input value for use during the normal operation mode of the wind turbine.

15. The monitoring system according to claim 14, wherein, if validation of the functioning of the secondary rotor speed measurement device fails, the processing device is further configured to:
output an error signal indicating a failure in the secondary rotor speed measurement device,
perform a self-check of the arrangement, and
if the self-check is successful: output the estimated rotor speed value to the wind turbine control system as the input value for use during a reduced operation mode of the wind turbine, or
if the self-check is not successful: output an error signal indicating that the wind turbine must be shut down.
